# EUROPÄISCHE PATENTSCHRIFT

(11) **EP 2 560 789 B1**
(45) Veröffentlichungstag und Bekanntmachung des Hinweises auf die Patenterteilung: **01.10.2014**
(21) Anmeldenummer: 11727908.3
(22) Anmeldetag: 06.04.2011
(51) Int. Cl.: B24C 1/06, B24C 1/08, B05B 7/20, C23C 4/12

(54) **VERFAHREN ZUM BEARBEITEN EINER OBERFLÄCHE EINES BAUTEILS**
METHOD FOR PROCESSING A SURFACE OF A COMPONENT
PROCÉDÉ DE TRAITEMENT D'UNE SURFACE D'UN COMPOSANT

(30) Priorität: 22.04.2010 DE 102010017859
(43) Veröffentlichungstag der Anmeldung: 27.02.2013
(73) Patentinhaber: MTU Aero Engines AG, 80995 München (DE)
(72) Erfinder: SCHNEIDERBANGER, Stefan, 85232 Bergkirchen (DE); HERTTER, Manuel, 81247 München (DE); JAKIMOV, Andreas, 81245 München (DE); TEWES, Jochen, 80333 München (DE)
(86) Internationale Anmeldenummer: PCT/DE2011/000368
(87) Internationale Veröffentlichungsnummer: WO 2011/131166

(56) Entgegenhaltungen:
- EP-A1- 1 845 171
- WO-A1-00/23201
- WO-A1-99/43861
- WO-A1-03/072844
- CN-Y- 201 389 521
- JP-A- 5 263 212
- US-A- 5 816 811

## Beschreibung

Die vorliegende Erfindung betrifft ein Verfahren zum Bearbeiten einer Oberfläche eines Bauteils.

Obwohl auf beliebige Bauteile anwendbar, werden die vorliegende Erfindung sowie die ihr zugrundeliegende Problematik in Bezug auf Flugzeugtriebwerke näher erläutert. Aus der EP 2 014 415 A1 und aus der WO99-43861 A1 sind Verfahren gemäß dem Oberbegriff des Patentanspruchs 1 bekannt.

Bei dem aus der EP 2 014 415 A1 bekannten Verfahren werden Bauteile eines Flugzeugtriebwerks zunächst mit einem ersten Pulver mit einer ersten chemischen Zusammensetzung bestrahlt und hiernach mit einem zweiten Pulver mit einer von der ersten chemischen Zusammensetzung abweichenden, zweiten chemischen Zusammensetzung beschichtet. Das Beschichten und das Bestrahlen findet im Wege eines Hochgeschwindigkeitsflammspritzens oder Kaltgasspritzens statt. Das Bestrahlen mit dem ersten Pulver führt zum einem Aufrauen der Oberfläche des Bauteils, was auch als Aktivieren bezeichnet wird. Die Beschichtung haftet gut auf der aufgerauten Oberfläche des Bauteils. Die so gebildete Beschichtung kann beispielsweise als Verschleißschutzbeschichtung dienen, welche die Lebensdauer des beschichteten Bauteils merklich erhöht.

Bei diesem bekannten Verfahren hat es sich als nachteilig herausgestellt, dass nach dem Bestrahlen Rückstände des ersten Pulvers auf der Oberfläche des Bauteils verbleiben können, welche als Fehlerstellen für die nachfolgende Beschichtung mit dem zweiten Pulver wirken und somit eine Anbindung der Beschichtung an dem Bauteil schwächen können.

Hiervon ausgehend ist es Aufgabe der vorliegenden Erfindung, ein Verfahren zum Bestrahlen und Beschichten einer Bauteiloberfläche bereitzustellen, welches die vorgenannten Nachteile zumindest reduziert.

Diese Aufgabe wird erfindungsgemäß durch ein Verfahren mit den Merkmalen des Patentanspruchs 1 gelöst.

Demgemäß wird ein Verfahren zum Bearbeiten einer Oberfläche eines Bauteils, insbesondere im Luftfahrtbereich, mit den folgenden Schritten bereitgestellt: Bestrahlen des Bauteils mit einem ersten Pulver; und Beschichten des Bauteils mit einem zweiten Pulver; wobei das erste Pulver dieselbe chemische Zusammensetzung aufweist wie das zweite Pulver.

Die der vorliegenden Erfindung zu Grunde liegende Idee besteht darin, für das Bestrahlen und das Beschichten jeweils ein Pulver mit derselben chemischen Zusammensetzung zu verwenden. Dies hat den Vorteil, dass somit eine Beschichtung erzeugt werden kann, die frei ist von Strahlmitteleinschlüssen anderen Materials als das der Beschichtung selbst, wodurch ein gutes Anhaften der Beschichtung an der Oberfläche des Bauteils sichergestellt werden kann.

Vorteilhafte Weiterbildungen ergeben sich aus den Unteransprüchen.

"HVOF-Spritzen" steht vorliegend für Hochgeschwindigkeitsflammspritzen (Engl.: High Velocity Oxy-Fuel Spraying).

Gemäß einer bevorzugten Weiterbildung der Erfindung erfolgt das Bestrahlen mittels Kaltgasspritzens und/oder HVOF-Spritzens. Dadurch wird ein Aufrauen der Oberfläche des Bauteils erzielt.

Gemäß einer bevorzugten Weiterbildung der Erfindung erfolgt das Beschichten mittels Kaltgasspritzens und/oder HVOF-Spritzens. Dadurch kann eine stark an der Oberfläche des Bauteils haftende Beschichtung erzeugt werden.

In diesem Zusammenhang sei angemerkt, dass das erste und zweite Pulver beim Bestrahlen und Beschichten mittels Kaltgasspritzens und/oder HVOF-Spritzens mit hoher Geschwindigkeit, bspw. mit 200 bis 500 Meter pro Sekunde, unter Verwendung eines Trägergases auf die Oberfläche des Bauteils geschossen, dabei aber nicht aufgeschmolzen wird. Dadurch, dass das erste und zweite Pulver beim Spritzen nicht aufgeschmolzen wird, kann eine chemische Veränderung der Zusammensetzung des ersten und zweiten Pulvers sicher vermieden werden. Bevorzugt erfolgt das Bestrahlen und Beschichten mittels derselben Einrichtung, insb. mittels desselben HVOF-Brenners oder derselben Kaltgaspistole.

Gemäß einer bevorzugten Weiterbildung der Erfindung weist das Pulver für das Bestrahlen eine erste Partikelgröße und das Pulver für das Beschichten eine zweite Partikelgröße auf, wobei die erste Partikelgröße von der zweiten Partikelgröße abweicht. Bevorzugt ist die erste Partikelgröße größer ist als die zweite Partikelgröße. Weiter bevorzugt ist die erste Partikelgröße größer 40 µm und beträgt die zweite Partikelgröße zwischen 5 µm und 60 µm. Für das Beschichten werden kleine Partikel benötigt, während für das Bestrahlen große Partikel zu bevorzugen sind.

Gemäß einer bevorzugten Weiterbildung der Erfindung wird das erste und zweite Pulver als Mischung bereitgestellt und vor dem Bestrahlen und Beschichten in das erste und zweite Pulver getrennt. Dies ist vor dem Hintergrund vorteilhaft, dass das Pulver naturgemäß als Mischung von Partikeln mit unterschiedlichen Größen angeliefert bzw. bereitgestellt wird. Trennt man nun diese Pulvermischung in das erste und zweite Pulver mit den großen bzw. kleinen Partikelgrößen, kann vorteilhaft die gesamte Pulvermischung verwendet werden, ohne dass nennenswerte Abfälle entstehen.

Gemäß einer bevorzugten Weiterbildung der Erfindung wird das zweite Pulver vor dem Beschichten einer Wärmebehandlung unterzogen. Dadurch können selbst spröde Metalle sowie Keramiken gut als Beschichtungswerkstoff, d.h. als zweites Pulver, zum Beschichten der Oberfläche des Bauteils verwendet werden. Bei der Wärmebehandlung kann es sich beispielsweise um ein Spannungsarmglühen, Weichglühen oder Lösungsglühen handeln.

Gemäß einer bevorzugten Weiterbildung der Erfindung ist das erste und zweite Pulver eine Nickelbasislegierung z. B.: IN718; Nimonic90; Mar M-247; 94Ni-Cr 6A1; Titanlegierung z. B.: Ti6Al4V; Lotwerkstoffe z. B.: L-Ag55Sn; Kupferlegierung z. B.: Cu9Al-1Fe; Aluminiumlegierung z.B.: Al-5Cu-1,5Ni-0,25Mn-0,25Sb-0,25Co-0,2Ti-0,2Zr; Stähle z. B.: Fe-11,8Cr-2,8Ni-1,6Co-1,8Mo-0,32V.

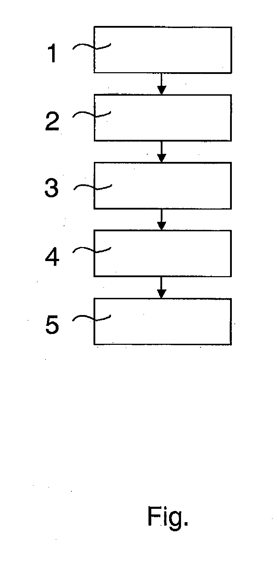

Die Erfindung wird im Folgenden anhand von Ausführungsbeispielen unter Bezugnahme auf die beiliegenden Figur der Zeichnung näher erläutert.

Die Figur zeigt schematisch mehrere Verfahrensschritte eines Verfahrens gemäß einem Ausführungsbeispiel der vorliegenden Erfindung.

In einem ersten Schritt 1 wird ein Pulvermischung bereitgestellt. Die Pulvermischung weist von Natur aus Partikel mit unterschiedlichen Größen auf.

Diese Pulvermischung wird nun in einem weiteren Schritt 2 beispielsweise mittels Siebens in ein erstes Pulver mit einer ersten Partikelgröße, beispielsweise größer 40 µm, und ein zweites Pulver mit einer zweiten Partikelgröße, beispielsweise zwischen 5 µm und 60 µm getrennt.

Hierauf (Schritt 3) kann das zweite Pulver wärmebehandelt werden, beispielsweise mittels Spannungsarmglühens, Weichglühens oder Lösungsglühens.

In einem weiteren Schritt 4 im Anschluss oder parallel zu Schritt 3 wird ein Bauteil, insbesondere ein Bauteil eines Flugzeugtriebwerks, beispielsweise eine Schaufel, mit dem ersten Pulver bestrahlt. Dies kann mittels HVOF-Spritzens oder Kaltgasspritzens des ersten Pulvers erfolgen. Dazu wird eine geeignete Spritzeinrichtung verwendet, beispielsweise ein HVOF-Brenner oder eine Kaltgaspistole. Dies führt zu einem Aufrauen, d.h. Aktivieren, der Oberfläche des Bauteils.

In Schritt 5 wird das Bauteil mit dem zweiten Pulver beschichtet. Dies kann ebenfalls mittels HVOF-Spritzens oder Kaltgasspritzens des zweiten Pulvers erfolgen. Dazu kann insbesondere dieselbe Spritzeinrichtung verwendet werden wie für das Bestrahlen des Bauteils.

Somit wird eine Beschichtung erzeugt, die frei ist von Strahlmitteleinschlüssen anderen Materials als das der Beschichtung selbst.

Der Schutzumfang der Erfindung ist in den beiliegenden Ansprüchen festgelegt.

## Patentansprüche

1. Verfahren zum Bearbeiten einer Oberfläche eines Bauteils, insbesondere im Luftfahrtbereich, mit den folgenden Schritten:
Bestrahlen (4) des Bauteils mit einem ersten Pulver; und
Beschichten (5) des Bauteils mit einem zweiten Pulver;
**dadurch gekennzeichnet,**
**dass** das erste Pulver dieselbe chemische Zusammensetzung aufweist wie das zweite Pulver und das erste Pulver für das Bestrahlen (4) eine erste Partikelgröße und das zweite Pulver für das Beschichten (5) eine zweite Partikelgröße aufweist, wobei die erste Partikelgröße von der zweiten Partikelgröße abweicht und wobei sowohl das Bestrahlen (4) und das Beschichten (5) mittels Kaltgasspritzens und/oder HVOF-Spritzens erfolgt, wobei durch das Bestrahlen (4) ein Aufrauen und Aktivieren der Oberfläche erzielt wird und durch das Beschichten (5) eine stark an der Oberfläche des Bauteils haftende Beschichtung erzeugt wird, die frei ist von Strahlmitteleinschlüssen anderen Materials als das der Beschichtung selbst.

2. Verfahren nach Anspruch 1,
**dadurch gekennzeichnet,**
**dass** die erste Partikelgröße größer ist als die zweite Partikelgröße.

3. Verfahren nach Anspruch 2,
**dadurch gekennzeichnet,**
**dass** die erste Partikelgröße größer 40 µm ist und die zweite Partikelgröße zwischen 5 µm und 60 µm beträgt.

4. Verfahren nach einem der vorhergehenden Ansprüche,
**dadurch gekennzeichnet,**
**dass** das erste und zweite Pulver als Mischung bereitgestellt (1) und vor dem Bestrahlen und Beschichten in das erste und zweite Pulver getrennt (2) wird.

5. Verfahren nach einem der vorhergehenden Ansprüche,
**dadurch gekennzeichnet,**
**dass** das zweite Pulver vor dem Beschichten einer Wärmebehandlung unterzogen (3) wird.

6. Verfahren nach einem der vorhergehenden Ansprüche,
**dadurch gekennzeichnet,**
**dass** das erste und zweite Pulver eine Nickelbasislegierung, Titanlegierung, Kupferlegierung, Aluminiumlegierung, ein Stahl und/oder ein Lotwerkstoff ist.

## Claims

1. Method for processing a surface of a component, in particular in the aviation sector, having the following steps:
blasting (4) of the component with a first powder; and
coating (5) of the component with a second powder,
**characterised in that**
the first powder has the same chemical composition as the second powder, and the first powder for the blasting (4) has a first particle size, and the second powder for the coating (5) has a second particle size, wherein the first particle size differs from the second particle size, and wherein both the blasting (4) and the coating (5) are effected by means of cold-gas spraying and/or HVOF-spraying, wherein roughening and activation of the surface are attained by means of the blasting (4), and a coating that adheres strongly to the surface of the component and is free of blasting-medium inclusions of any material other than that of the coating itself is produced by means of the coating (5).

2. Method according to claim 1,
**characterised in that**
the first particle size is larger than the second particle size.

3. Method according to claim 2,
**characterised in that** the first particle size is larger than 40 µm, and the second particle size amounts to between 5 µm and 60 µm.

4. Method according to one of the preceding claims, **characterised in that** the first and second powder are supplied (1) as a mixture and separated (2) into the first and second powder prior to the blasting and coating.

5. Method according to one of the preceding claims, **characterised in that** the second powder is subjected to heat-treatment (3) prior to the coating.

6. Method according to one of the preceding claims, **characterised in that** the first and second powder is a nickel-based alloy, titanium alloy, copper alloy, aluminium alloy, a steel and/or a soldering material

## Revendications

1. Procédé de traitement d'une surface d'un composant, en particulier dans le secteur aéronautique, comprenant les étapes suivantes :
projection (4) d'une première poudre sur le composant ; et
revêtement (5) du composant avec une deuxième poudre ;
**caractérisé en ce que**
la première poudre présente la même composition chimique que la deuxième poudre, et **en ce que** la première poudre présente une première grandeur de particule pour la projection (4) et la deuxième poudre une deuxième grandeur de particule pour le revêtement (5), la première grandeur de particule étant différente de la deuxième grandeur de particule, la projection (4) ainsi que le revêtement (5) étant effectués par projection de gaz à froid et/ou projection HVOF, une rugosification et une activation de la surface étant obtenues au moyen de la projection (4) et une couche de revêtement fortement adhérente à la surface étant générée au moyen du revêtement (5), laquelle est exempte d'inclusions d'agent de projection d'un autre type que le matériau de la couche de revêtement en tant que telle.

2. Procédé selon la revendication 1, **caractérisé en ce que**
la première grandeur de particule est supérieure à la deuxième grandeur de particule.

3. Procédé selon la revendication 2, **caractérisé en ce que**
la première grandeur de particule est supérieure à 40 µm et **en ce que** la deuxième grandeur de particule est comprise entre 5 µm et 60 µm.

4. Procédé selon l'une des revendications précédentes, **caractérisé en ce que**
la première et la deuxième poudres sont préparées sous forme de mélange (1) et sont séparées en première et en deuxième poudre (2) avant la projection et le revêtement.

5. Procédé selon l'une des revendications précédentes, **caractérisé en ce que**
la deuxième poudre est soumise à un traitement thermique (3) avant le revêtement.

6. Procédé selon l'une des revendications précédentes, **caractérisé en ce que**
la première et la deuxième poudres sont un alliage à base de nickel, un alliage de titane, un alliage de cuivre, un alliage d'aluminium, un acier et/ou un matériau de brasage.
